# EUROPÄISCHE PATENTSCHRIFT

(11) **EP 3 429 958 B1**
(45) Veröffentlichungstag und Bekanntmachung des Hinweises auf die Patenterteilung: **25.12.2019**
(21) Anmeldenummer: 17712719.8
(22) Anmeldetag: 14.03.2017
(51) Int. Cl.: C01B 3/02, C01C 1/04, C01B 3/50, C01C 1/02

(54) **VERFAHREN UND VORRICHTUNG ZUR BEHANDLUNG EINES GASGEMISCHS**
METHOD AND DEVICE FOR TREATING A GAS MIXTURE
PROCÉDÉ ET DISPOSITIF DE TRAITEMENT D'UN MÉLANGE GAZEUX

(30) Priorität: 18.03.2016 DE 102016105127
(43) Veröffentlichungstag der Anmeldung: 23.01.2019
(73) Patentinhaber: thyssenkrupp Industrial Solutions AG, 45143 Essen (DE); thyssenkrupp AG, 45143 Essen (DE)
(72) Erfinder: PORZ, Lutz, 61899 Mannheim (DE)
(74) Vertreter: thyssenkrupp Intellectual Property GmbH
(86) Internationale Anmeldenummer: PCT/EP2017/055969
(87) Internationale Veröffentlichungsnummer: WO 2017/157925

(56) Entgegenhaltungen:
- JP-A- 2000 107 549
- US-A- 5 434 330
- US-A1- 2005 013 768
- ALI ESLAMIMANESH ET AL: "Application of gas hydrate formation in separation processes: A review of experimental studies", JOURNAL OF CHEMICAL THERMODYNAMICS, ACADEMIC PRESS, LONDON, GB, Bd. 46, 7. Oktober 2011 (2011-10-07), Seiten 62-71, XP028394311, ISSN: 0021-9614, DOI: 10.1016/J.JCT.2011.10.006 [gefunden am 2011-10-14]

## Beschreibung

Die Erfindung betrifft ein Verfahren und eine Vorrichtung zur Behandlung eines Gasgemischs, insbesondere bei der Herstellung von Ammoniak aus einem Synthesegas in einer Ammoniakanlage, wobei Inerte wie Methan und Argon in Clathrathydrate bzw. Semi-Clathrathydrate überführt und aus dem Gasgemisch abgetrennt werden.

Bei der Herstellung von Ammoniak enthält das Synthesegas neben Wasserstoff und Stickstoff üblicherweise zusätzlich Inertgase wie Methan und Edelgase, welche die Ausbeute an Ammoniak bei der Herstellung von Ammoniak beeinträchtigen. Bei den im Stand der Technik bekannten Verfahren zur Herstellung von Ammoniak wird üblicherweise zunächst frisches Synthesegas mehrstufig auf hohen einen Druck verdichtet. Dann wird das verdichtete, frische Synthesegas in einen Kreislauf eingespeist, der durch einen oder mehrere katalysatorgefüllte Reaktoren geführt wird, in denen Ammoniak erzeugt wird. Im Kreislauf ist üblicherweise ein Abscheidesystem vorgesehen, mit welchem das erzeugte Ammoniak aus dem Kreislauf in flüssiger Form entnommen werden kann.

Die Inertgase sind in Ammoniak nur in geringer Konzentration löslich und werden daher nur zu einem geringen Teil zusammen mit dem Ammoniak aus dem Kreislauf entnommen. Um eine Anreicherung der Inertgase in dem Kreislauf zu vermeiden, wird bei herkömmlichen Verfahren kontinuierlich ein Teil des im Kreislauf geführten Gases als Spülgas (Purge) ausgeschleust. Aus diesem ausgeschleusten Spülgas werden anschließend Reste von Ammoniak ausgewaschen. Wasserstoff sowie ggf. auch Stickstoff werden abgeschieden und zurückgewonnen, beispielsweise über Membranen oder durch Zerlegung bei tiefen Temperaturen. Die verbleibenden Inertgase, insbesondere Methan und Argon, werden verworfen oder anderweitig verwendet, insbesondere zu Heizzwecken. Der zurückgewonnene Wasserstoff sowie ggf. auch der zurückgewonnene Stickstoff werden dem frischen Synthesegas vor der Verdichtung beigemischt und auf diese Weise verwertet.

DE 100 57 863 offenbart ein Verfahren zur Herstellung von Ammoniak aus frischem Synthesegas, welches außer Wasserstoff und Stickstoff inerte Bestandteile enthält, in mindestens zwei Reaktionssystemen, wobei die Synthese von Ammoniak aus Synthesegas nacheinander in verschiedenen Synthesesystemen erfolgt. Dabei werden Inertgasbestandteile über einen Spülgasstrom (Purge) abgetrennt und ausgeschleust.

Es ist energetisch jedoch ungünstig, Spülgas aus dem Kreislauf auszuschleusen, da somit große Mengen an Gas bei der Trennung einem Druckverlust unterworfen werden und danach wieder aufwändig rückverdichtet werden müssen. Aus diesem Grund wird häufig eine Anreicherung der Inertgase von ursprünglich 1 bis 2 Vol.-% im frischen Synthesegas bis auf 10 bis 20 Vol.-% innerhalb des im Kreislauf geführten Gases in Kauf genommen, obwohl damit zwangsläufig der Nachteil verbunden ist, dass die Partialdrücke von Wasserstoff und Stickstoff beträchtlich niedriger liegen als in einem Synthesekreislauf, welcher weniger oder keine Inertgase enthält. Aus diesem Grund müssen auch Katalysatorvolumina und die sie enthaltenden Reaktoren deutlich größer dimensioniert werden, als dies ohne Inertgase im Synthesekreislauf erforderlich wäre.

US 2005/013768 A1 und US 5,935,544 A offenbaren Verfahren, die das unerwünschte Methan und Inerte mittels einer kryogenen Trenneinheit vom Waserstoff/Stickstoff abreichern. Es wird beschrieben, dass hierzu unter anderem ein 25 bis 35% Stickstoffüberschuss nötig ist. Diese "Excess Air" ist bei der hier beschriebenen Erfindung nicht notwendig, womit sich die Größe des Luftverdichters nicht ändert.

Bei der Ammoniaksynthese entsteht im Reaktor aus dem Synthesegas ein Gasgemisch, welches neben dem nicht umgesetzten Wasserstoff und Stickstoff das gebildete Ammoniak sowie die Inertgase enthält. Am Ausgang des Reaktors liegt das erzeugte Ammoniak gasförmig vor. Um das Ammoniak vom Produktgas zu trennen, wird es kondensiert, damit es flüssig aus dem Kreislauf abgezogen werden kann. Da der Taupunkt des Ammoniaks von dessen Partialdruck abhängt, wird die Kondensation von Ammoniak begünstigt durch einen hohen Synthesedruck, eine hohe Ammoniakkonzentration und eine niedrige Temperatur. Eine hohe Ammoniakkonzentration lässt sich dabei mit großen Katalysatorvolumina sowie geringen Konzentrationen an Inertgas erzielen.

DE 10 055 818 offenbart ein Verfahren zur katalytischen Herstellung von Ammoniak aus einem Stickstoff-Wasserstoff-Gasgemisch umfassend die Bildung von Synthesegas aus Erdgas und sauerstoffreichem Gas in einem autothermen Reaktor, die katalytische Umwandlung von Kohlenmonoxid in Wasserstoff, die Entfernung von Kohlenmonoxid, Kohlendioxid und Methan sowie das Zuführen des erhaltenen Stickstoff-Wasserstoff-Gasgemischs zu einer katalytischen Synthese von Ammoniak. JP 2000107549 A offenbart ein Verfahren zur Abtrennung von Edelgas mit Hilfe von Clathrathydraten bzw. Semi-Clathrathydraten ohne auf eine Destillation zurückgreifen zu müssen.

Die im Stand der Technik beschriebenen Verfahren zur Aufarbeitung bzw. Behandlung von Gasgemischen umfassend Wasserstoff, Stickstoff, Argon und Methan, insbesondere bei der Herstellung von Ammoniak, sind jedoch nicht in jeglicher Hinsicht zufriedenstellend und es besteht somit ein Bedarf an verbesserten Verfahren und Vorrichtungen.

Es ist eine Aufgabe der vorliegenden Erfindung, verbesserte Verfahren und Vorrichtungen zur Behandlung von Gasgemischen umfassend Wasserstoff, Stickstoff, Argon und Methan, insbesondere bei der Herstellung von Ammoniak bereitzustellen.

Diese Aufgabe wird durch den Gegenstand der Patentansprüche gelöst.

Ein erster Aspekt der Erfindung betrifft ein Verfahren zur Behandlung eines Gasgemischs umfassend Wasserstoff, Stickstoff, Argon und Methan, gemäß dem man dem Gasgemisch Wasser zugibt, um Clathrathydrate bzw. Semi-Clathrathydrate des Argons zu bilden und man mindestens einen Anteil der gebildeten Clathrathydrate bzw. Semi-Clathrathydrate von dem Gasgemisch abtrennt, wobei man aus zumindest einem Teil des Wasserstoffs und zumindest einem Teil des Stickstoffs, welche nach dem Abtrennvorgang in dem Gasgemisch enthalten sind, Ammoniak synthetisiert.

Das in dem erfindungsgemäßen Verfahren bereitgestellte Gasgemisch umfasst Wasserstoff, Stickstoff, Argon und Methan. Ebenso kann das Gasgemisch weitere Komponenten wie Wasser (Dampf), Kohlenmonoxid, Kohlendioxid und weitere Edelgase wie beispielsweise Helium umfassen. Bevorzugt beträgt der Anteil an weiteren Komponenten neben Wasserstoff, Stickstoff, Argon und Methan in dem bereitgestellten Gasgemisch höchstens 5 Vol.-%, bevorzugter höchstens 3 Vol.-% oder höchstens 1 Vol.-%. Das Gasgemisch wird bevorzugt als Synthesegas aus Kohlenwasserstoffen, vorzugsweise aus Erdgas, Wasser in Form von Dampf und Luft bzw. Sauerstoff durch Reformierung und eine sich ggf. anschließende Gasreinigung gewonnen. Geeignete Verfahren zur Erzeugung eines solchen Synthesegases sind einem Fachmann bekannt und es kann beispielsweise vollumfänglich verwiesen werden auf A. Nielsen, I. Dybkjaer, Ammonia - Catalysis and Manufacture, Springer Berlin 1995, Kapitel 6, Seiten 202-326. Der volumenanteilige Hauptbestandteil dieses Gasgemischs ist bevorzugt Wasserstoff, wobei der Stickstoffanteil ggf. auch relativ hoch sein kann, abhängig davon, ob bei der Herstellung Luft, mit Sauerstoff angereicherte Luft oder sogar reiner Sauerstoff eingesetzt wurde.

Das in dem erfindungsgemäßen Verfahren bereitgestellte Gasgemisch kann als Synthesegas bereits herkömmliche Aufbereitungsschritte durchlaufen haben, wie z.B. Heliumentfernung, Erdgasentschwefelung, Konvertierung von Kohlenmonoxid zu Kohlendioxid und Kohlendioxidwäsche. Auch nach Durchführung dieser Aufbereitungsschritte umfasst das Gasgemisch jedoch Wasserstoff, Stickstoff, Wasser (Dampf), Methan und Argon, üblicherweise auch noch andere Bestandteile wie Restmengen an Kohlenmonoxid, Restmengen an Kohlendioxid und ggf. Spuren von Helium. Es ist einem Fachmann bekannt, dass Erdgas in verschiedenen Regionen häufig auch eine unterschiedliche Zusammensetzung aufweisen kann. Beispielsweise variiert der Argongehalt im Erdgas je nach der Region, aus welcher das Erdgas stammt.

Gemäß dem erfindungsgemäßen Verfahren wird dem Gasgemisch Wasser zugegeben, insbesondere das bereitgestellte Gasgemisch mit Wasser vermischt. Bevorzugt wird dem bereitgestellten Gasgemisch Wasser derart zugegeben, dass die relative Luftfeuchte des Gasgemischs, also das prozentuale Verhältnis zwischen dem Dampfgehalt des Gasgemischs und dem maximal möglichen Dampfgehalt des Gasgemischs, nach der Zugabe von Wasser mindestens 50% beträgt, bevorzugter mindestens 60%, mindestens 70%, mindestens 80%, mindestens 90% oder mindestens 99%.

Vorzugsweise wird das Gasgemisch komprimiert und/oder temperiert, um die Bildung von Clathrathhydraten bzw. Semi-Clathrathhydraten zu fördern, wobei vorzugsweise der Druck und die Temperatur des Gasgemischs so gewählt werden, dass sich aus dem im Gasgemisch befindlichen Methan und Argon mit Wasser Clathrathydrate bzw. Semi-Clathrathydrate sowie ein an Methan und Argon abgereichertes Gasgemisch bilden.

Clathrathydrate sind eisähnliche Wasser-Gastmolekül-Gebilde, welche bei Anwesenheit von Wasser, passender Gastmoleküle, niedrigen Temperaturen und hohen Drücken eine thermodynamisch stabile Einschlussverbindung auch oberhalb des normalen Gefrierpunktes von reinem Wasser bilden. Ist das Gas ein Multikomponentengemisch, gibt es eine selektive Einlagerung der einzelnen Gaskomponenten in der festen Hydratphase, und gleichzeitig eine Abreicherung dieser in der Gasphase. Bei Semi-Clathrathydrate besteht die Gitterstruktur aus Wasserstoffbrücken zwischen den Wassermolekülen und Wasserstoffbrücken der funktionalen Gruppen des Gastmoleküls (vgl. Me₃N, EtCH₂NH₂, (CH₃)₂CHNH₂ und Me₂CHNH₂). Des Weiteren gibt es Semi-Clathrate, in denen ein Teil der Gitterstruktur aufgebrochen ist, um größere Moleküle als Gast aufzunehmen (vgl. Alkylammoniumsalze wie z.B. Tetra-n-Butylammoniumbromid (TBAB (C₄H₉)₄N⁺Br⁻)). Teile des Salzes, wie z.B. das Anion, können auch an der Gitterstruktur teilnehmen.

Die Bildung von Clathrathydraten ist beispielsweise in US 2009/0035627 A1 beschrieben. US 2009/0035627 A1 offenbart dabei die Bildung von Clathrathydraten und Semi-Clathrathydraten aus Wasser, einem Gas und ggf. einem Promotor.

Clathrathydrate bzw. Semi-Clathrathydrate sind generell bei relativ hohen Drücken und niedrigen Temperaturen thermodynamisch stabil, wobei die genauen Stabilitätsbedingungen von der Art des eingeschlossenen Gases/Gasgemisches, der Hydratstruktur und Konzentrationen von eventuellen Zusätzen abhängen. Die Abstände zwischen den Gastgasmolekülen sind dabei wesentlich kleiner als in einem freien Gas unter denselben Bedingungen.

In einer bevorzugten Ausführungsform liegt das Gasgemisch zur Clathrathydrat- bzw. Semi-Clathrathydratbildung bei einem Druck im Bereich von 30 bis 65 bara vor bzw. wird dazu komprimiert, bevorzugter in bzw. auf einen Druck im Bereich von 35 bis 65 bara, im Bereich von 35 bis 62 bara, im Bereich von 35 bis 60 bara, im Bereich von 40 bis 60 bara oder im Bereich von 40 bis 55 bara.

In einer weiteren bevorzugten Ausführungsform wird das Gasgemisch zur Clathrathydrat- bzw. Semi-Clathrathydratbildung in einer zweiten Stufe auf einen Druck im Bereich von 50 bis 80 bara komprimiert, bevorzugter auf einen Druck im Bereich von 58 bis 72 bara, im Bereich von 60 bis 70 bara, im Bereich von 60 bis 65 bara, im Bereich von 62 bis 65 bara oder im Bereich von 57 bis 64 bara.

In einer weiteren bevorzugten Ausführungsform wird das Gasgemisch zur Clathrathydrat- bzw. Semi-Clathrathydratbildung in einer dritten Stufe auf einen Druck im Bereich von 90 bis 130 bara komprimiert, bevorzugter auf einen Druck im Bereich von 100 bis 105 bara, im Bereich von 110 bis 115 bara, im Bereich von 110 bis 120 bara, im Bereich von 111 bis 118 bara oder im Bereich von 112 bis 122 bara.

In einer weiteren bevorzugten Ausführungsform wird das Gasgemisch zur Clathrathydrat bzw. Semi-Clathrathydratbildung in einer vierten oder weiteren Stufen auf einen Druck im Bereich von 160 bis 240 bara komprimiert, bevorzugter auf einen Druck im Bereich von 190 bis 230 bara, im Bereich von 200 bis 220 bara, im Bereich von 205 bis 212 bara, , im Bereich von 205 bis 229 bara oder im Bereich von 210 bis 230 bara.

In einer weiteren bevorzugten Ausführungsform wird das Gasgemisch zur Clathrathydrat- bzw. Semi-Clathrathydratbildung dreistufig komprimiert, wobei das Gasgemisch in einer ersten Stufe auf einen Druck im Bereich von 30 bis 70 bara, bevorzugter im Bereich von 35 bis 62 bara komprimiert wird, in einer zweiten Stufe auf einen Druck im Bereich von 120 bis 160 bara komprimiert wird, bevorzugter im Bereich von 130 bis 160 bara, und in einer dritten Stufe auf einen Druck im Bereich von 152 bis 160 bara komprimiert wird.

In einer weiteren bevorzugten Ausführungsform wird das Gasgemisch zur Clathrathydratbildung auf eine Temperatur im Bereich von -3°C bis 20°C temperiert, bevorzugter auf eine Temperatur im Bereich von 0°C bis 15°C, im Bereich von 2°C bis 15°C, im Bereich von 3°C bis 15°C, im Bereich von 4°C bis 15 °C oder im Bereich von 4°C bis 10°C.

Bevorzugt wird das Gasgemisch zur Clathrathydrat- bzw. zur Semiclathrathydratbildung auf einen Druck im Bereich von 30 bis 65 bara komprimiert und auf eine Temperatur im Bereich von 0°C bis 15°C temperiert, bevorzugter auf einen Druck im Bereich von 35 bis 62 bara und eine Temperatur im Bereich von 0°C bis 15°C, auf einen Druck im Bereich von 35 bis 60 bara und eine Temperatur im Bereich von 0°C bis 15°C, auf einen Druck im Bereich von 40 bis 60 bara und eine Temperatur im Bereich von 0°C bis 15°C oder auf einen Druck im Bereich von 40 bis 55 bara und eine Temperatur im Bereich von 0°C bis 15°C. In einer anderen bevorzugten Ausführungsform wird das Gasgemisch auf einen Druck im Bereich von 30 bis 65 bara komprimiert und auf eine Temperatur im Bereich von 0°C bis 15°C temperiert, bevorzugter auf einen Druck im Bereich von 30 bis 65 bara und eine Temperatur im Bereich von 1°C bis 15°C, auf einen Druck im Bereich von 30 bis 65 bara und eine Temperatur im Bereich von 2°C bis 15°C, auf einen Druck im Bereich von 30 bis 65 bara und eine Temperatur im Bereich von 3°C bis 15°C, auf einen Druck im Bereich von 30 bis 65 bara und eine Temperatur im Bereich von 4°C bis 15°C oder auf einen Druck im Bereich von 30 bis 65 bara und eine Temperatur im Bereich von 5°C bis 10°C. Besonders bevorzugt wird das Gasgemisch auf einen Druck im Bereich von 35 bis 62 bara komprimiert und auf eine Temperatur im Bereich von 4°C bis 15°C temperiert.

Bevorzugt sind der Druck und die Temperatur derart gewählt, dass ein Großteil des Methans und des Argons, welche sich in dem Gasgemisch befinden, mit Wasser in Clathrathydrate bzw. mit Zusätzen in Semi-Clathrathydrate überführt werden. In einer bevorzugten Ausführungsform werden aus mindestens 50 Vol.-% des im Gasgemisch befindlichen Methans Clathrathydrate bzw. Semi-Clathrathydrate gebildet, bevorzugter aus mindestens 60 Vol.-%, mindestens 70 Vol.-%, mindestens 80 Vol.-%, mindestens 90 Vol.-%, mindestens 95 Vol.-% oder mindestens 99 vol.-%. In einer anderen bevorzugten Ausführungsform werden aus mindestens 50 Vol.-% des im Gasgemisch befindlichen Argons Clathrathydrate bzw. Semi-Clathrathydrate gebildet, bevorzugter aus mindestens 60 Vol.-%, mindestens 70 Vol.-%, mindestens 80 Vol.-%, mindestens 90 Vol.-%, mindestens 95 Vol.-% oder mindestens 99 Vol.-%.

In einer bevorzugten Ausführungsform werden aus mindestens 50 Vol.-% der Gesamtmenge des im Gasgemisch befindlichen Methans und Argons Clathrathydrate bzw. Semi-Clathrathydrate gebildet, bevorzugter aus mindestens 60 Vol.-%, mindestens 70 Vol.-%, mindestens 80 Vol.-%, mindestens 90 Vol.-%, mindestens 95 Vol.-% oder mindestens 99 vol.-%.

Bevorzugt sind der Druck und die Temperatur derart gewählt, dass der Wasserstoff und der Stickstoff aus dem Gasgemisch keine Clathrathydrate bzw. Semi-Clathrathydrate bilden. Dadurch wird bevorzugt ein Gasgemisch gebildet, welches an Methan und Argon abgereichert ist und an Stickstoff und Wasserstoff angereichert.

Bevorzugt erfolgt das Temperieren des Gasgemischs in einem speziellen Reaktor (Hydratbildungsreaktor), welcher entsprechend druckfest ausgelegt ist, um die bei der Clathrathydratbildung bzw. Semi-Clathrathydratbildung herrschenden Drücke aufnehmen zu können. Zum Temperieren des Gasgemischs bzw. Wasser-Gasgemischs wird das Gasgemisch bzw. das Wasser-Gasgemisch bevorzugt mit einem Wärmeüberträger in Kontakt gebracht, welcher beispielsweise als Rohrbündelwärmeüberträger oder als Rippenwärmeüberträger ausgebildet sein kann. In einer bevorzugten Ausführungsform erfolgt das Temperieren des Gasgemischs mit Hilfe von flüssigem Ammoniak. Die Wärmeüberträger sind in einer weiteren bevorzugten Ausführungsform im Hydratbildungsreaktor integriert. Die Wärmeüberträger entnehmen dem System auch die Bildungswärme.

Die Schritte der Wasserzugabe und das Komprimieren und/oder Temperieren des erfindungsgemäßen Verfahrens können nacheinander oder gleichzeitig stattfinden. Bevorzugt erfolgt die Zugabe von Wasser zu dem bereitgestellten Gasgemischs sowie das Komprimieren und/oder Temperieren des Gasgemischs gleichzeitig, bevorzugt in einem Hydratbildungsreaktor. Das Komprimieren des Gasgemisches findet bevorzugt vor der Vermischung des Gasgemisches mit Wasser statt.

Die Bildung der Clathrathydrate bzw. der Semi-Clathrathydrate kann durch aktives Bewegen des Hydrat-Wassergemisches z.B. mit Hilfe eines Rührers oder aber auch einem statischen Mischer oder mit Hilfe lose bewegter Teile, wie z.B. Kugeln, begünstigt werden.

In einer bevorzugten Ausführungsform sind die verfahrenstechnischen Schritte der Wärmeübertragung und des Bewegens des Hydrat-Wassergemischs in einem Hydratbildungsreaktor apparativ kombiniert.

In einer bevorzugten Ausführungsform werden die Clathrathydrate bzw. Semi-Clathrathydrate mit einem großen Überschuss an Wasser gebildet, sodass sich ein fließfähiges Wasser-Hydratgemisch (Hydratslurry) bildet. Bevorzugt ist mit einem *"großen Überschuss an Wasser*" gemeint, dass der Massenanteil der Clathrathydrate bzw. Semi-Clathrathydrate an der Gesamtmasse von Clathrathydraten bzw. Semi-Clathrathydraten und Wasser vorzugsweise in einem Bereich von 1 bis 20 Gew.-% liegt, bevorzugter in einem Bereich von 5 bis 15 Gew.-%, in einem Bereich von 7 bis 12 Gew.-% oder in einem Bereich von 5 bis 10 Gew.-%. Bevorzugt liegt dabei der Massenanteil an Wasser bezogen auf die Gesamtmasse an Clathrathydraten bzw. Semi-Clathrathydraten und Wasser im Bereich von 80 bis 100 Gew.-%, bevorzugter im Bereich von 85 bis 95 Gew.-%.

In einer bevorzugten Ausführungsform werden dem Hydratslurry Additive hinzugegeben um die Bildungsbedingungen zu beeinflussen. Als Promotoren zählen u.a. Am₄NF, Am₃BuNF, Am₂Bu₂NF, AmBu₃NF, Bu₄NF, Am₄NBr, Am₃BuNBr, Am₂Bu₂NBr, AmBu₃NBr, Bu₄NBr, Am₄NCl, Am₄NI, Bu₄NCl, Bu₄NBr, Bu₄NI (wobei N für Stickstoff zählt, F für Fluor, Am für Ammonium, Br für Brom, Cl für Chlor, I für Iod) und weitere, u.a. auch ihre Isomere.

In einer weiteren bevorzugten Ausführungsform wird dem Wasser bzw. Hydratslurry Additive hinzugegeben, welche positiven Einfluss, im Sinne der Erfindungsmeldung, auf die Kinetik der Hydratbildung und/oder Hydratzersetzung nehmen.

In einer bevorzugten Ausführungsform werden dem Hydratslurry Additive in geringen Mengen hinzugegeben, um Kristallagglomeration zu verlangsamen bzw. zu verhindern. Bevorzugt bedeutet in diesem Zusammenhang eine *"geringe Menge",* dass der Massenanteil der Additive an der Gesamtmasse von Clathrathydraten bzw. Semi-Clathrathydraten, Wasser und Additiven höchstens 5 Gew.-% beträgt, bevorzugter höchstens 3 Gew.-% oder höchstens 1 Gew.-%. Diese sog. Anti-Agglomerants verzögern das Zusammenwachsen gebildeter Hydratkristalle, haben aber keinen bzw. kleinen Einfluss und spielen eine untergeordnete Rolle auf die Kinetik, das Phasenverhalten und/oder die thermodynamischen Clathrathydrate bzw. Semi-Clathrathydratbildungs- und zersetzungsbedingungen. Als Anti-Agglomerants zählen u.a. Diethanolamid, Dioctylsulfosuccinate, Ethoxylated polyols und amine, Polypropoxylate, Alkylglucoside, Dodecyl-2-(2-caprolactamyl) ethanamid etc.

In einer weiteren bevorzugten Ausführungsform werden die Clathrathydrate bzw. Semi-Clathrathydrate mit einem niedrigen Überschuss an Wasser gebildet. Bevorzugt bedeutet in diesem Zusammenhang ein *"niedriger Überschuss",* dass der Massenanteil an Wasser an der Gesamtmasse von Clathrathydraten bzw. Semi-Clathrathydraten und Wasser im Bereich von 0 bis 20 Gew.-% liegt, bevorzugter im Bereich von 10 bis 20 Gew.-%. Hierbei wird der Transport der gebildeten Clathrathydrate bzw. Semi-Clathrathydrate über eine mechanische Förderung bewegt, z.B. Schnecke, Kugeln, Schnecke mit Kugeln, Becherwerke, Becherwerke mit Kugeln. Der Vorteil eines nur geringen Überschusses an Wasser für die gewünschte Clathrathydratbildung bzw. Semi-Clathrathydratbildung ist, dass man weniger Wasser bewegen muss und damit z.B. konstruktiv bedingt kleinere Vorrichtungen bauen kann.

Die Abtrennung zumindest eines Teils der gebildeten Clathrathydrate bzw. Semi-Clathrathydrate kann bevorzugt durch Phasentrennung erfolgen.

Durch das Abtrennen der Clathrathydrate bzw. Semi-Clathrathydrate werden bevorzugt mindestens 50 Vol.-% des Methans, welches in dem eingangs bereitgestellten Gasgemisch enthalten ist, aus dem Gasgemisch abgetrennt, bevorzugter mindestens 60 Vol.-%, mindestens 70 Vol.-%, mindestens 80 Vol.-%, mindestens 90 Vol.-% oder mindestens 99 Vol.-%. In einer anderen bevorzugten Ausführungsform werden mindestens 50 Vol.-% des Argons, welches in dem bereitgestellten Gasgemisch enthalten ist, aus dem Gasgemisch abgetrennt, bevorzugter mindestens 60 Vol.-%, mindestens 70 Vol.-%, mindestens 80 Vol.-%, mindestens 90 Vol.-% oder mindestens 99 Vol.-%. In einer weiteren bevorzugten Ausführungsform werden mindestens 50 Vol.-% des Argons und des Methans, welche in dem bereitgestellten Gasgemisch enthalten sind, als Clathrathydrate bzw. Semi-Clathrathydrate aus dem Gasgemisch abgetrennt, bevorzugter mindestens 60 Vol.-%, mindestens 70 Vol.-%, mindestens 80 Vol.-%, mindestens 90 Vol.-% oder mindestens 99 Vol.-%.

Bevorzugt werden in dem vorangehenden Trennungsschritt jedoch Wasserstoff und Stickstoff nicht abgetrennt. Bevorzugt umfasst das Gasgemisch nach diesem Schritt neben Wasserstoff und Stickstoff höchstens 10 Vol.-% an weiteren Komponenten wie Wasser, Argon oder Methan, bevorzugter höchstens 9 Vol.-%, höchstens 8 Vol.-%, höchstens 7 Vol.-%, höchstens 6 Vol.-%, höchstens 5 Vol.-%, höchstens 4 Vol.-%, höchstens 3 Vol.-%, höchstens 2 Vol.-% oder höchstens 1 Vol.-%.

Die Zersetzung der Clathrathydrate bzw. der Semi-Clathrathydrate erfolgt bevorzugt bei einem niedrigeren Druck als die Bildung. Bevorzugt liegt der Druck, bei welchem die Zersetzung der Clathrathydrate bzw. der Semi-Clathrathydrate erfolgt, im Bereich von 1 bis 50 bara, bevorzugter im Bereich von 2 bis 40 bara, im Bereich von 3 bis 30 bara oder im Bereich von 5 bis 20 bara. Die Abtrennung des Clathrathydrat-Wassergemisches (Hydratslurry) von dem aufgereinigten Gasgemisch erfolgt bei Hydratbildungsdruck.

Vorzugsweise wird aus zumindest einem Teil des Wasserstoffs und zumindest einem Teil des Stickstoffs, welche in dem Gasgemisch enthalten sind, Ammoniak synthetisiert. Bevorzugt wird das Gasgemisch dazu verdichtet, bevorzugt auf einen Druck im Bereich von 60 bis 250 bara, bevorzugter auf einen Druck im Bereich von 160 bis 215 bara, im Bereich von 140 bis 155 bara, im Bereich von 130 bis 160 bara, im Bereich von 200 bis 230 bara, im Bereich von 210 bis 229 bara und bevorzugt anschließend in einen Ammoniakreaktor geleitet, in welchem Ammoniak synthetisiert wird aus zumindest einem Teil des Wasserstoffs und zumindest einem Teil des Stickstoffs, welcher in dem Gasgemisch enthalten ist. Vorzugsweise weist der Ammoniakreaktor zumindest ein Katalysatorbett auf, welches von dem Gasgemisch bevorzugt radial durchströmt wird, vorzugsweise von außen nach innen. Bevorzugt wird zumindest ein Teil des Ammoniaks von dem Gasgemisch durch Abkühlen abgetrennt, wozu das Gasgemisch bevorzugt zunächst einen Wärmeüberträger und anschließend eine Kondensationsvorrichtung durchläuft. Dabei wird das Gasgemisch abgekühlt, so dass Ammoniak auskondensiert und so von der Gasphase durch Phasentrennung abgetrennt werden kann.

Bevorzugt wird das Gasgemisch nach dem Abtrennen von Ammoniak in einem Kreislauf geführt und erneut mit dem Gasgemisch vereint, welches zu Beginn des erfindungsgemäßen Verfahrens bereitgestellt wird. Um eine Anreicherung der Inertgase im Kreislauf zu vermeiden, wird üblicherweise ein Teil des im Kreislauf geführten Gases kontinuierlich als Spülgas (Purge) ausgeschleust. Aus diesem ausgeschleusten Spülgas werden anschließend Reste von Ammoniak ausgewaschen. Wasserstoff sowie ggf. auch Stickstoff werden abgeschieden und zurückgewonnen, beispielsweise über Membranen oder durch Zerlegung bei tiefen Temperaturen. Das H₂/N₂-reiche Gasgemisch wird vorzugsweise dem Loop wieder zurückgeführt. Das Inerten-reiche Gasgemisch wird vorzugsweise dem Brenngas der Reformingsection zugeführt.

Es wurde überraschend gefunden, dass durch das Abtrennen von Methan, Argon und Wasser aus dem Gasgemisch durch Clathrathydratbildung bzw. Semi-Clathrathydrate das Ausschleusen eines Spülgases (Purge) reduziert bzw. vollständig eingespart werden kann. Da ein Ausschleusen von Spülgas energetisch ungünstig ist, da große Mengen an Gas einem Druckverlust unterworfen werden, kann die Ammoniaksynthese durch eine Reduktion oder einen vollständigen Entfall des Ausschleusen von Spülgas energie- und damit kosteneffizienter durchgeführt werden. Auch eine aufwändige Restgaswäsche des Spülgases und eine Rückgewinnung von Wasserstoff kann dadurch minimiert bzw. vollständig eingespart werden. Durch das Abtrennen von Methan und Argon aus dem Gasgemisch steigen zudem die Partialdrücke von Wasserstoff und Stickstoff, wodurch die Ausbeute an Ammoniak bei der Ammoniaksynthese optimiert werden kann.

In einer bevorzugten Ausführungsform umfasst das in dem erfindungsgemäßen Verfahren bereitgestellte Gasgemisch auch Kohlenmonoxid und/oder Kohlendioxid, wobei das Gasgemisch ggf. derart temperiert und/oder komprimiert wird, dass sich aus dem im Gasgemisch befindlichen Kohlenmonoxid und/oder Kohlendioxid mit Wasser Clathrathhydrate bzw. Semi-Clathrathydrate sowie ein an Kohlenmonoxid und/oder Kohlendioxid abgereichertes Gasgemisch bilden.

Umfasst das bereitgestellte Gasgemisch Kohlenmonoxid und/oder Kohlendioxid, werden vorzugsweise aus mindestens 50 Vol.-% des Kohlenmonoxids Clathrathydrate bzw. Semi-Clathrathydrate gebildet, bevorzugter aus mindestens 60 Vol.-%, mindestens 70 Vol.-%, mindestens 80 Vol.-%, mindestens 90 Vol.-% oder mindestens 99 Vol.-%. In einer anderen bevorzugten Ausführungsform werden aus mindestens 50 Vol.-% des Kohlendioxids Clathrathydrate bzw. Semi-Clathrathydrate gebildet, bevorzugter aus mindestens 60 Vol.-%, mindestens 70 Vol.-%, mindestens 80 Vol.-%, mindestens 90 Vol.-% oder mindestens 99 Vol.-%.

Durch das Abtrennen der entsprechenden Clathrathydrate werden mindestens 50 Vol.-% des Kohlendioxids, welches ggf. in dem bereitgestellten Gasgemischs enthalten ist, aus dem Gasgemisch entfernt, bevorzugter mindestens 60 Vol.-%, mindestens 70 Vol.-%, mindestens 80 Vol.-%, mindestens 90 Vol.-% oder mindestens 99 Vol.-%. In einer anderen bevorzugten Ausführungsform werden mindestens 50 Vol.-% des Kohlenmonoxids, welches ggf. in dem bereitgestellten Gasgemisch enthalten ist, aus dem Gasgemisch entfernt, bevorzugter mindestens 60 Vol.-%, mindestens 70 Vol.-%, mindestens 80 Vol.-%, mindestens 90 Vol.-% oder mindestens 99 Vol.-%.

Durch das Abtrennen der Clathrathydrate bzw. Semi-Clathrathydrate, welche Kohlenmonoxid und/oder Kohlendioxid umfassen, kann das Abtrennen dieser Komponenten aus dem Gasgemisch vor der Ammoniaksynthese, was üblicherweise durch katalytische Umsetzung zu Methan in einer Methanisierung, durch Pressure Swing Adsorption (PSA) oder durch Ausfrieren erfolgt, weitestgehend minimiert oder sogar vollständig eingespart werden.

In einer bevorzugten Ausführungsform wird die Bildung der Clathrathydrate bzw. Semi-Clathrathydrate durch die Zugabe von Promotoren, insbesondere Tetrabutylammoniumbromid und/oder Tetrahydrofuran, unterstützt. Durch die Zugabe von Tetrabtuylammoniumbromid und/oder Tetrahydrofuran wird bei der Bildung der Clathrathydrate bzw. Semi-Clathrathydrate das thermodynamische Gleichgewicht zu milderen Bedingungen beeinflusst.

Bevorzugt wird bei der Bildung der Clathrathydrate bzw. Semi-Clathrathydrate so viel Tetrabutylammoniumbromid zugegeben, dass der Anteil an Tetrabutylammoniumbromid in den Semi-Clathrathydraten im Bereich von 0 bis 50 Gew.-% liegt, bevorzugter im Bereich von 1 bis 40 Gew.-%, im Bereich von 1 bis 30 Gew.,-%, im Bereich von 1 bis 20 Gew.-% oder im Bereich von 1 bis 10 Gew.-%. In einer anderen bevorzugten Ausführungsform wird bei der Bildung der Clathrathydrate bzw. Semi-Clathrathydrate so viel Tetrahydrofuran zugegeben, dass der Anteil an Tetrahydrofuran in den Semi-Clathrathydraten im Bereich von 0 bis 50 Gew.-% liegt, bevorzugter im Bereich von 1 bis 40 Gew.-%, im Bereich von 1 bis 30 Gew.-%, im Bereich von 1 bis 20 Gew.-% oder im Bereich von 1 bis 10 Gew.-%.

In einer bevorzugten Ausführungsform umfasst das erfindungsgemäße Verfahren zusätzlich den Schritt des Zersetzens zumindest eines Teils zuvor abgetrennten Clathrathydrate bzw. Semi-Clathrathydrate in ihre Bestandteile.

In einer bevorzugten Ausführungsform werden mindestens 50 Gew.-% abgetrennten Clathrathydrate bzw. Semi-Clathrathydrate in ihre Bestandteile zersetzt, bevorzugter mindestens 60 Gew.-%, mindestens 70 Gew.-%, mindestens 80 Gew.-%, mindestens 90 Gew.-% oder mindestens 99 Gew.-%. Bevorzugt werden die abgetrennten Clathrathydrate bzw. Semi-Clathrathydrate durch Temperieren in ihre Bestandteile zersetzt. Bevorzugt werden die Clathrathydrate bzw. Semi-Clathrathydrate dazu auf eine Temperatur von > 15°C temperiert, bevorzugter auf eine Temperatur von > 25°C oder > 40°C. Zum Temperieren wird bevorzugt Wärme verwendet, welche in dem erfindungsgemäßen Verfahren bei der Synthesegaskompression freigesetzt wird. Dabei kann die Temperatur auch gleichbleibend sein und die Wärme latent für die Zersetzung der Clathrathydrate bzw. Semi-Clathrathydrate verwendet werden.

Bevorzugt wird zum Zersetzen der Clathrathydrate bzw. Semi-Clathrathydrate die Wärme verwendet, welche zuvor beim Komprimieren des Gasgemischs freigesetzt wird. Die Wärme kann dabei mit Hilfe aller einem Fachmann bekannten Mittel und Verfahren auf die Clathrathydrate übertragen werden. Beispielsweise kann beim Komprimieren des Gasgemischs das komprimierte Gasgemisch über einen Wärmeüberträger geführt werden, in welchem die Wärme auf ein Fluid übertragen wird, mit welchem die abgetrennten Clathrathydrate bzw. Semi-Clathrathydrate gewärmt und dadurch zersetzt werden, bzw. wodurch die latente Wärme aufgebracht wird um die Clathrathydrate bzw. Semi-Clathrathydrate zu zersetzten.

In einer weiteren bevorzugten Ausführungsform werden die abgetrennten Clathrathydrate bzw. Semi-Clathrathydrate durch Druckabsenkung in ihre Bestandteile zersetzt. Dies kann in einem Hydratzersetzungsreaktor realisiert werden. Bevorzugt wird zum Zersetzen der Clathrathydrate bzw. der Semi-Clathrathydrate der Druck auf einen Wert von höchstens 100 bara gesenkt, bevorzugter auf einen Druck von höchstens 80 bara, höchstens 60 bara, höchstens 40 bara oder höchstens 20 bara.

In einer bevorzugten Ausführungsform werden die abgetrennten Clathrathydrate bzw. Semi-Clathrathydrate sowohl durch Temperieren als auch durch Druckabsenkung in ihre Bestandteile zersetzt. Bevorzugt werden die Clathrathydrate dazu auf eine Temperatur von >15°C temperiert und der Druck auf einen Wert von höchstens 100 bara gesenkt.

Das Zersetzen der Clathrathydrate bzw. der Semi-Clathrathydrate kann durch aktives Bewegen des Hydrat-Wassergemisches z.B. mit Hilfe eines Rührers oder aber auch einem statischen Mischer begünstigt werden.

In einer bevorzugten Ausführungsform sind die verfahrenstechnischen Schritte der Wärmeübertragung und des Bewegens des Hydrat-Wassergemischs in einem Hydratzersetzungsreaktor apparativ kombiniert.

In einer bevorzugten Ausführungsform wird zumindest ein Teil des bei der Zersetzung der Clathrathydrate bzw. Semi-Clathrathydrate freiwerdenden Wassers erneut in dem erfindungsgemäßen Verfahren, bevorzugt dem Hydratbildungsreaktor, zugeführt. Bevorzugt werden mindestens 50 Gew.-% des bei der Zersetzung der Clathrathydrate bzw. Semi-Clathrathydrate freiwerdenden Wassers erneut zugeführt, bevorzugter mindestens 60 Gew.-%, mindestens 70 Gew.-%, mindestens 80 Gew.-%, mindestens 90 Gew.-% oder mindestens 99 Gew.-%. Hierdurch wird die Hydratbildung begünstigt, weil auf den sog. Memory-Effekt zurückgegriffen werden kann, bei dem Teile der von den Wassermolekülen gebildeten Käfigstruktur kurz- bis mittelfristig erhalten bleibt.

In einer bevorzugten Ausführungsform werden die Schritte es Abtrennens sowie des Zersetzens und ggf. auch das Komprimieren und/oder Temperieren, mindestens einmal wiederholt, bevorzugter mindestens zweimal oder mindestens dreimal, um das in dem Gasgemisch enthaltene Argon und Methan und ggf. weitere Komponenten wie Kohlenmonoxid und/oder Kohlendioxid möglichst vollständig von dem Gasgemisch abzutrennen.

Ein weiterer Aspekt der Erfindung betrifft eine Vorrichtung zur Herstellung von Ammoniak, wobei die Vorrichtung die folgenden miteinander in Wirkverbindung stehenden Komponenten umfasst:
(A) Komprimiervorrichtung, konfiguriert zum Komprimieren eines Gasgemischs umfassend Wasserstoff, Stickstoff, Argon, Methan;
(B) Temperiervorrichtung, konfiguriert zum Temperieren des komprimierten Gasgemischs;
(C) Abtrennvorrichtung, konfiguriert zum Abtrennen der gebildeten Clathrathydrate bzw. Semi-Clathrathydrate von dem Gasgemisch;
(D) Synthesevorrichtung, konfiguriert zur Synthese von Ammoniak aus zumindest einem Teil des Wasserstoffs und zumindest einem Teil des Stickstoffs, welche in dem Gasgemisch enthalten sind.

Alle bevorzugten Ausführungsformen, welche vorstehend im Zusammenhang mit dem erfindungsgemäßen Verfahren beschrieben wurden, gelten analog auch für die erfindungsgemäße Vorrichtung und werden daher nicht wiederholt.

Die Komprimiervorrichtung ist bevorzugt zum Komprimieren eines Gasgemischs auf einen Druck konfiguriert, bei welchem das verwendete Gasgemisch Clathrathydrate bzw. Semi-Clathrathydrate bildet. Dazu kann jede einem Fachmann bekannte Vorrichtung eingesetzt werden, welche zum Komprimieren eines Gasgemischs geeignet ist. Ggf. können dazu auch mehrere Komprimiervorrichtungen hintereinander geschaltet sein.

Die Temperiervorrichtung kann jede einem Fachmann bekannte Vorrichtung zum Temperieren eines Gasgemischs umfassen und ist bevorzugt als Wärmeüberträger, bevorzugter als Plattenwärmeüberträger, noch bevorzugter in Form von Wärmeübertägerrippen oder Wärmebündelüberträger ausgebildet.

Die Abtrennvorrichtung ist konfiguriert zum Abtrennen der gebildeten Clathrathydrate bzw. Semi-Clathrathydrate von dem Gasgemisch und ist bevorzugt angeordnet nach der Komprimiervorrichtung, nach der Temperiervorrichtung und vor der Synthesevorrichtung.

Die Komprimiervorrichtung, die Temperiervorrichtung und die Abtrennvorrichtung können entweder jeweils als unabhängige Vorrichtungen ausgebildet sein, oder einzelne Bestandteile einer gemeinsamen Vorrichtung sein, welche dann als Purifier bezeichnet werden kann.

Die Synthesevorrichtung ist zur Synthese von Ammoniak aus Wasserstoff und Stickstoff konfiguriert und umfasst bevorzugt einen Druckbehälter mit mindestens einem Katalysatorbett, welches bevorzugt radial durchströmt wird. Die Synthesevorrichtung ist bevorzugt nach der Abtrennvorrichtung angeordnet.

Die erfindungsgemäße Vorrichtung ist besonders geeignet zur Durchführung des erfindungsgemäßen Verfahrens. Ein weiterer Aspekt der Erfindung betrifft daher die Verwendung der erfindungsgemäßen Vorrichtung in dem erfindungsgemäßen Verfahren.

In einer bevorzugten Ausführungsform umfasst die Vorrichtung zur Herstellung von Ammoniak zusätzlich die Komponenten (E) und (F):
(E) Mischvorrichtung, konfiguriert zum Mischen des Gasgemischs mit Wasser;
(F) Zersetzungsvorrichtung, angeordnet nach der Abtrennvorrichtung, konfiguriert zum Zersetzen der gebildeten Clathrathydrate bzw. Semi-Clathrathydrate in ihre Bestandteile.

Bevorzugt ist die Komprimiervorrichtung vor der Temperier- und der Mischvorrichtung angeordnet. In einer anderen bevorzugten Ausführungsform sind die Mischvorrichtung und die Temperiervorrichtung apparativ miteinander verbunden bzw. einzelne Bestandteile einer gemeinsamen Vorrichtung.

In der Zersetzungsvorrichtung, welche beispielsweise als Hydratzersetzungsreaktor ausgeführt sein kann, werden bevorzugt mindestens 50 Gew.-% der in der Abtrennvorrichtung abgetrennten Clathrathydrate bzw. Semi-Clathrathydrate zersetzt, bevorzugter mindestens 60 Gew.-%, mindestens 70 Gew.-%, mindestens 80 Gew.-%, mindestens 90 Gew.-% oder mindestens 99 Gew.-%. Die Beschaffenheit der in der Zersetzungsvorrichtung gebildeten Bestandteile hängen jeweils von der Beschaffenheit der in die Zersetzungsvorrichtung eingeleiteten Clathrathydrate bzw. Semi-Clathrathydrate ab. Ein Bestandteil ist dabei Wasser.

Bevorzugt umfasst die erfindungsgemäße Vorrichtung weiterhin Mittel zum Rückführen zumindest eines Teils des in der Zersetzungsvorrichtung gebildeten Wassers zur Mischvorrichtung, so dass zumindest ein Teil des in der Zersetzungsvorrichtung gebildeten Wassers in der Temperier- bzw. der Komprimiervorrichtung zur Bildung von Clathrathydraten bzw. Semi-Clathrathydraten verwendet werden kann. Geeignete Mittel zum Rückführen von Wasser von der Zersetzungsvorrichtung zur Mischvorrichtung umfassen beispielsweise entsprechend verschaltete Rohrleitungen, und ihre genaue Ausführung ist einem Fachmann bekannt.

## Patentansprüche

1. Verfahren zur Behandlung eines Gasgemischs umfassend Wasserstoff, Stickstoff, Argon und Methan, wobei man dem Gasgemisch Wasser zugibt, um Clathrathydrate bzw. Semi-Clathrathydrate des Argons zu bilden und man mindestens einen Anteil der gebildeten Clathrathydrate bzw. Semi-Clathrathydrate des Argons von dem Gasgemisch abtrennt,
**dadurch gekennzeichnet, dass** man aus zumindest einem Teil des Wasserstoffs und zumindest einem Teil des Stickstoffs, welche nach dem Abtrennvorgang in dem Gasgemisch enthalten sind, Ammoniak synthetisiert.

2. Verfahren nach Anspruch 1, bei dem man das Gasgemisch nach der Zugabe von Wasser komprimiert und/oder temperiert, um die Bildung von Clathrathydraten bzw. Semi-Clathrathydraten zu fördern.

3. Das Verfahren nach einem der Ansprüche 1 oder 2, wobei das Gasgemisch bei einem Druck im Bereich von 30 bis 65 bara vorliegt bzw. in einem ersten Schritt auf einen solchen Druck komprimiert wird.

4. Das Verfahren nach einem der Ansprüche 1 bis 3, wobei das Gasgemisch auf eine Temperatur im Bereich von -3 °C bis 20 °C temperiert wird.

5. Das Verfahren nach einem der vorstehenden Ansprüche, wobei das Temperieren des Gasgemischs mit Hilfe von flüssigem Ammoniak erfolgt.

6. Das Verfahren nach einem der vorstehenden Ansprüche, wobei jeweils mindestens 50 Vol.-% des Argons und/oder des Methans als Clathrathydrate bzw. Semi-Clathrathydrate abgetrennt werden.

7. Das Verfahren nach einem der vorstehenden Ansprüche, wobei die Bildung der Clathrathydrate bzw. Semi-Clathrathydrate durch die Zugabe von Promotoren, insbesondere Tetrabutylammoniumbromid und/oder Tetrahydrofuran, unterstützt wird.

8. Das Verfahren nach einem der vorstehenden Ansprüche, wobei das Ausgangs-Gasgemisch weiterhin auch Kohlenmonoxid und/oder Kohlendioxid umfasst und wobei das Gasgemisch bei der Zugabe von Wasser derart temperiert und komprimiert wird, dass sich aus dem im Gasgemisch befindlichen Kohlenmonoxid und/oder Kohlendioxid mit Wasser Clathrathydrate bzw. Semi-Clathrathydrate sowie ein an Kohlenmonoxid und/oder Kohlendioxid abgereichertes Gasgemisch bilden.

9. Das Verfahren nach einem der vorstehenden Ansprüche, wobei das Verfahren den zusätzlichen Schritt umfasst:
Zersetzen zumindest eines Teils der zuvor abgetrennten Clathrathydrate bzw. Semi-Clathrathydrate in ihre Bestandteile.

10. Das Verfahren nach Anspruch 9, wobei die abgetrennten Clathrathydrate bzw. Semi-Clathrathydrate durch Temperieren in ihre Bestandteile zersetzt werden.

11. Das Verfahren nach einem der Ansprüche 9 oder 10, wobei zum Zersetzen der Clathrathydrate die Wärme verwendet wird, welche beim Komprimieren des Gasgemischs freigesetzt wird.

12. Das Verfahren nach Anspruch 9, wobei die abgetrennten Clathrathydrate bzw. Semi-Clathrathydrate durch Druckabsenkung in ihre Bestandteile zersetzt werden.

13. Das Verfahren nach Anspruch 9, wobei die abgetrennten Clathrathydrate bzw. Semi-Clathrathydrate durch Temperieren und Druckabsenkung in ihre Bestandteile zersetzt werden.

14. Das Verfahren nach einem der Ansprüche 2 bis 13, wobei die Schritte des Komprimierens und/oder Temperierens und Abtrennens mindestens einmal wiederholt werden.

15. Vorrichtung zur Herstellung von Ammoniak, wobei die Vorrichtung die folgenden miteinander in Wirkverbindung stehenden Komponenten umfasst:
(A) Komprimiervorrichtung, konfiguriert zum Komprimieren eines Gasgemischs umfassend Wasserstoff, Stickstoff, Wasser, Argon und Methan;
(B) Temperiervorrichtung, konfiguriert zum Temperieren des komprimierten Gasgemischs;
(C) Abtrennvorrichtung, konfiguriert zum Abtrennen der gebildeten Clathrathydrate bzw. Semi-Clathrathydrate von dem Gasgemisch;
(D) Synthesevorrichtung, konfiguriert zur Synthese von Ammoniak aus zumindest einem Teil des Wasserstoffs und zumindest einem Teil des Stickstoffs, welche in dem Gasgemisch enthalten sind.

16. Die Vorrichtung nach Anspruch 15, wobei die Vorrichtung die zusätzlichen Komponenten (E) und (F) umfasst:
(E) Mischvorrichtung, konfiguriert zum Mischen des Gasgemischs mit Wasser
(F) Zersetzungsvorrichtung, konfiguriert zum Zersetzen der gebildeten Clathrathydrate bzw. Semi-Clathrathydrate in ihre Bestandteile.

17. Verwendung der Vorrichtung nach einem der Ansprüche 15 oder 16 in einem Verfahren nach einem der Ansprüche 1 bis 14.

## Claims

1. Method for treating a gas mixture comprising hydrogen, nitrogen, argon and methane, wherein water is added to the gas mixture in order to form argon clathrate hydrates or semi-clathrate hydrates, and at least a proportion of the argon clathrate hydrates or semi-clathrate hydrates formed is removed from the gas mixture, **characterized in that** ammonia is synthesized from at least a portion of the hydrogen and at least a portion of the nitrogen that are present in the gas mixture after the removal operation.

2. Method according to Claim 1, in which after the addition of water the gas mixture is compressed and/or the temperature thereof is controlled in order to promote the formation of clathrate hydrates or semi-clathrate hydrates.

3. The method according to either of Claims 1 and 2, wherein the gas mixture is at a pressure in the range from 30 to 65 bara or is compressed to such a pressure in a first step.

4. The method according to any of Claims 1 to 3, wherein the temperature of the gas mixture is controlled to a temperature in the range from -3°C to 20°C.

5. The method according to any of the preceding claims, wherein the temperature of the gas mixture is controlled with the aid of liquid ammonia.

6. The method according to any of the preceding claims, wherein at least 50% by volume in each case of the argon and/or of the methane is removed as clathrate hydrates or semi-clathrate hydrates.

7. The method according to any of the preceding claims, wherein the formation of the clathrate hydrates or semi-clathrate hydrates is assisted by the addition of promoters, in particular tetrabutylammonium bromide and/or tetrahydrofuran.

8. The method according to any of the preceding claims, wherein the starting gas mixture additionally also comprises carbon monoxide and/or carbon dioxide and wherein during the addition of water the temperature of the gas mixture is controlled and the gas mixture is compressed in such a way that the carbon monoxide and/or carbon dioxide present in the gas mixture together with water form clathrate hydrates or semi-clathrate hydrates and a carbon monoxide- and/or carbon dioxide-depleted gas mixture.

9. The method according to any of the preceding claims, wherein the method comprises the additional step of: decomposing at least a portion of the clathrate hydrates or semi-clathrate hydrates removed beforehand into their constituent parts.

10. The method according to Claim 9, wherein the removed clathrate hydrates or semi-clathrate hydrates are decomposed into their constituent parts by controlling the temperature.

11. The method according to either of Claims 9 and 10, wherein the heat that is released during compression of the gas mixture is used to decompose the clathrate hydrates.

12. The method according to Claim 9, wherein the removed clathrate hydrates or semi-clathrate hydrates are decomposed into their constituent parts by lowering the pressure.

13. The method according to Claim 9, wherein the removed clathrate hydrates or semi-clathrate hydrates are decomposed into their constituent parts by controlling the temperature and lowering the pressure.

14. The method according to any of Claims 2 to 13, wherein the steps of compressing and/or controlling the temperature and removal are repeated at least once.

15. Apparatus for producing ammonia, wherein the apparatus comprises the following components operatively connected to each other:
(A) compression apparatus, configured to compress a gas mixture comprising hydrogen, nitrogen, water, argon and methane;
(B) temperature control apparatus, configured to control the temperature of the compressed gas mixture;
(C) removal apparatus, configured to remove the formed clathrate hydrates or semi-clathrate hydrates from the gas mixture;
(D) synthesis apparatus, configured to synthesize ammonia from at least a portion of the hydrogen and at least a portion of the nitrogen that are present in the gas mixture.

16. The apparatus according to Claim 15, wherein the apparatus comprises the additional components (E) and (F) :
(E) mixing apparatus, configured to mix the gas mixture with water;
(F) decomposition apparatus, configured to decompose the formed clathrate hydrates or semi-clathrate hydrates into their constituent parts.

17. Use of the apparatus according to either of Claims 15 and 16 in a method according to any of Claims 1 to 14.

## Revendications

1. Procédé de traitement d'un mélange gazeux comprenant de l'hydrogène, de l'azote, de l'argon et du méthane, selon lequel de l'eau est ajoutée au mélange gazeux afin de former des clathrates hydrates ou des semi-clathrates hydrates de l'argon, et au moins une partie des clathrates hydrates ou des semi-clathrates hydrates de l'argon formés est séparée du mélange gazeux,
**caractérisé en ce que** de l'ammoniac est synthétisé à partir d'au moins une partie de l'hydrogène et d'au moins une partie de l'azote qui sont contenus dans le mélange gazeux après le processus de séparation.

2. Procédé selon la revendication 1, selon lequel le mélange gazeux est comprimé et/ou conditionné en température après l'ajout d'eau afin de favoriser la formation de clathrates hydrates ou de semi-clathrates hydrates.

3. Procédé selon l'une quelconque des revendications 1 ou 2, selon lequel le mélange gazeux se présente à une pression dans la plage allant de 30 à 65 bara ou est comprimé à une telle pression lors d'une première étape.

4. Procédé selon l'une quelconque des revendications 1 à 3, selon lequel le mélange gazeux est conditionné à une température dans la plage allant de -3 °C à 20 °C.

5. Procédé selon l'une quelconque des revendications précédentes, selon lequel le conditionnement en température du mélange gazeux a lieu à l'aide d'ammoniac liquide.

6. Procédé selon l'une quelconque des revendications précédentes, selon lequel à chaque fois au moins 50 % en volume de l'argon et/ou du méthane sont séparés sous la forme de clathrates hydrates et/ou de semi-clathrates hydrates.

7. Procédé selon l'une quelconque des revendications précédentes, selon lequel la formation des clathrates hydrates ou des semi-clathrates hydrates est supportée par l'ajout de promoteurs, notamment de bromure de tétrabutylammonium et/ou de tétrahydrofurane.

8. Procédé selon l'une quelconque des revendications précédentes, selon lequel le mélange gazeux initial comprend en outre également du monoxyde de carbone et/ou du dioxyde de carbone, et selon lequel le mélange gazeux est conditionné en température et comprimé lors de l'ajout de l'eau de telle sorte que des clathrates hydrates ou des semi-clathrates hydrates se forment à partir du monoxyde de carbone et/ou du dioxyde de carbone se trouvant dans le mélange gazeux avec de l'eau, ainsi qu'un mélange gazeux appauvri en monoxyde de carbone et/ou en dioxyde de carbone.

9. Procédé selon l'une quelconque des revendications précédentes, selon lequel le procédé comprend l'étape supplémentaire suivante :
la décomposition d'au moins une partie des clathrates hydrates ou des semi-clathrates hydrates séparés auparavant en leurs constituants.

10. Procédé selon la revendication 9, selon lequel les clathrates hydrates ou les semi-clathrates hydrates séparés sont décomposés en leurs constituants par conditionnement en température.

11. Procédé selon l'une quelconque des revendications 9 ou 10, selon lequel la chaleur qui est libérée lors de la compression du mélange gazeux est utilisée pour la décomposition des clathrates hydrates.

12. Procédé selon la revendication 9, selon lequel les clathrates hydrates ou les semi-clathrates hydrates séparés sont décomposés en leurs constituants par réduction de la pression.

13. Procédé selon la revendication 9, selon lequel les clathrates hydrates ou les semi-clathrates hydrates séparés sont décomposés en leurs constituants par conditionnement en température et réduction de la pression.

14. Procédé selon l'une quelconque des revendications 2 à 13, selon lequel les étapes de compression et/ou de conditionnement en température et de séparation sont répétées au moins à une reprise.

15. Dispositif pour la fabrication d'ammoniac, le dispositif comprenant les composants suivants en liaison fonctionnelle les uns avec les autres :
(A) un dispositif de compression, configuré pour la compression d'un mélange gazeux comprenant de l'hydrogène, de l'azote, de l'eau, de l'argon et du méthane ;
(B) un dispositif de conditionnement en température, configuré pour le conditionnement en température du mélange gazeux comprimé ;
(C) un dispositif de séparation, configuré pour la séparation des clathrates hydrates ou des semi-clathrates hydrates formés du mélange gazeux ;
(D) un dispositif de synthèse, configuré pour la synthèse d'ammoniac à partir d'au moins une partie de l'hydrogène et d'au moins une partie de l'azote qui sont contenus dans le mélange gazeux.

16. Dispositif selon la revendication 15, dans lequel le dispositif comprend les composants (E) et (F) supplémentaires :
(E) un dispositif de mélange, configuré pour le mélange du mélange gazeux avec de l'eau,
(F) un dispositif de décomposition, configuré pour la décomposition des clathrates hydrates ou des semi-clathrates hydrates formés en leurs constituants.

17. Utilisation du dispositif selon l'une quelconque des revendications 15 ou 16 dans un procédé selon l'une quelconque des revendications 1 à 14.
